# EUROPÄISCHE PATENTSCHRIFT

(11) **EP 0 893 224 B1**
(45) Veröffentlichungstag und Bekanntmachung des Hinweises auf die Patenterteilung: **29.12.2004**
(21) Anmeldenummer: 98111588.4
(22) Anmeldetag: 24.06.1998
(51) Int. Cl.: B29C 41/18, B29C 37/00, B29C 33/42, B29L 31/58

(54) **Slushverfahren zur Herstellung von Verkleidungen für Fahrzeuge mit einer Sollbruchstelle für einen Airbag**
Slush moulding of airbag cover with a tear line
Procédé de moulage par embouage d'un couvercle de protection de coussin gonflable de sécurité avec ligne de rupture

(30) Priorität: 24.07.1997 DE 19731776; 30.07.1997 DE 19732767
(43) Veröffentlichungstag der Anmeldung: 27.01.1999
(73) Patentinhaber: Benecke-Kaliko Aktiengesellschaft, D-30419 Hannover (DE)
(72) Erfinder: Kiesel, Gerd Henning, Dr.-Ing., 30827 Garbsen (DE); André, Walter, 30171 Hannover (DE)
(74) Vertreter: Patentanwälte Thömen & Körner

(56) Entgegenhaltungen:
- EP-A- 0 590 779
- FR-A- 2 702 989
- JP-A- 9 099 447
- US-A- 4 780 345
- US-A- 5 084 122
- US-A- 5 443 777
- US-A- 5 650 115
- DATABASE WPI Section Ch, Week 199705 Derwent Publications Ltd., London, GB; Class A95, AN 1997-047614 XP002152006 & JP 08 301053 A (INOAC CORP KK), 19. November 1996 (1996-11-19)
- DATABASE WPI Section Ch, Week 199707 Derwent Publications Ltd., London, GB; Class A32, AN 1997-072722 XP002152007 & JP 08 318807 A (INOAC CORP KK), 3. Dezember 1996 (1996-12-03)

## Beschreibung

Die Erfindung betrifft ein Verfahren zur Herstellung von Armaturentafeln, Tür- oder Seitenverkleidungen für Fahrzeuge mit einer Sollbruchstelle für einen Airbag gemäß dem Oberbegriff des Patentanspruchs 1.

Es ist bekannt, die Abdeckung für einen Airbag in einer Armaturentafel eines Kraftfahrzeuges als separate, gelenkig am Armaturenbrett befestigte Klappe auszuführen. Diese Klappe entspricht vom Aussehen her einem Handschuhkastendeckel, welcher jedoch meist kleiner ist, und bei Auslösung des Treibsatzes des Airbags von innen aufgestoßen wird. Diese Klappe wird dabei als gesondertes Teil gefertigt. Problematisch hierbei ist, daß das Dekor des Deckels sehr sorgfältig und arbeitsaufwendig auf den Deckel aufgelegt und mit diesem festhaftend verschäumt werden muß, damit sich Teile der Airbagklappe bei der explosionsgetriebenen Öffnung nicht ablösen und den Passagier verletzen können. Nachteilig bei der Ausführung der Airbagklappe als separates Teil sind die hohen Kosten für die einzelne Klappe und die schwierige Abstimmung von Farbe, Finish und Narbung passend zur umgebenden Fläche der Instrumententafel.

Es ist versucht worden, dieses Problem dadurch zu lösen, daß man eine deckellose, integrierte Öffnungslinie für den Airbag in der Instrumententafel vorsieht. Hierbei wird die Klappenkonstruktion durch Anstanzen bzw. Ausstanzen des Trägerteils aus Blech bzw. durch Schwächung von Zonen bei gespritzten Trägern erreicht. Bei Auslösung des Treibsatzes sprengt die durch Sollbruchstellen definierte Klappe den Träger umhüllenden Schaum und die Folie. Die Folie muß hierfür in der geplanten Aufreißlinie geschwächt sein, und zwar durch Kerbung, Schnitt, Nut in Vorder- und/oder Rückseite.

Wird die Rückseite der Folie geschwächt, entsteht ein "unsichtbarer" Airbagdeckel. Jedoch ist für die Schwächung der Rückseite die Technologie für den Serieneinsatz noch nicht ausgereift. Es wird bisher versucht, eine Schwächung in Form einer Kerbe oder Nut von der Rückseite her durch Einsatz eines Lasers, durch einen ziehenden Schnitt oder durch Stanzen mit einem heißen Messer zu erreichen.

Aus optischen Gründen kann es auch wünschenswert sein, eine Schwächung der Folie von der Sichtseite, d. h., von der Narbseite her, zu erreichen. In diesem Fall dient die Sollbruchstelle in Form einer Nut oder Kerbe zur Erzielung eines optischen Effekts. Hierbei wird ganz bewußt die Sollbruchstelle dazu eingesetzt, durch Schaffung einer Schattenfuge die Airbagklappe deutlich hervorzuheben. Auch-bei dieser Art der Schaffung von Sollbruchstellen für eine Airbagklappe sind bisher bekannte Verfahren arbeits- und kostenintensiv, da nach Herstellung der eigentlichen Folie die Sollbruchstellen in Form von Nuten oder Kerben separat mit Werkzeugen in die Folie eingebracht werden müssen. Dabei wird Narbung und Finish verändert.

Das Dokument JP 03 301 053 A offenbart ein Verfahren gemäß dem Oberbegriff des Anspruchs 1.

Aus der JP 08 301 053 A ist es bekannt, ein für den Fahrzeuginnenraum aus einer Slushhaut herzustellen. Dazu wird Slushmaterial in einer Form gesintert. In der Form befindet sich eine Erhebung mit einem Steg. Zur Bildung einer Sollbruchstelle für einen Airbag wird das Slushmaterial zuerst in der Form entlang einer durch den Steg vorgegebenen Linie geschwächt. Nach Entnahme der Slushhaut aus der Form wird diese dann an einer durch die Erhebung der Slushform gebildeten Einstülpung und hinterschäumt. Im zusammengeschoben Zustand wird die Slushhaut dann als Verkleidungsteil verwendet.

Ferner ist aus der JP 09 099 447 A bekannt, ein für den Fahrzeuginnenraum aus einer Slushhaut herzustellen, indem Slushmaterial in einer Form gesintert wird. Zur Bildung einer Sollbruchstelle für einen Airbag wird das Slushmaterial nach dem Sintern von der der späteren Sichtseite abgewandten Seite in einem gesonderten Arbeitsgang mit einem Werkzeug geschwächt.

Schließlich ist aus der US-A-4 780 345 bekannt, eine mehrfarbige Slushhaut in einer Slushform herzustellen. Grenzen der Farbbereiche werden sowohl durch einen Steg in der Form als auch durch eine am Steg dichtend anliegende Trennwand einer Pulverkammer gebildet.

Aufgabe der Erfindung ist es daher, ein Verfahren der eingangs genannten Art zu schaffen, bei dem eine verbesserte Sollbruchstelle für eine Airbagklappe in einem einzigen Verfahrensgang zusammen mit der Schaffung der Folie geschaffen wird.

Diese Aufgabe wird bei einem Verfahren der eingangs genannten Art mit den Merkmalen des Anspruchs 1 gelöst.

Es hat sich gezeigt, daß ein an sich bekanntes Slush-Verfahren mit zusätzlichen Modifikationen zur Lösung der gestellten Aufgabe geeignet ist und daß nach diesem Verfahren hergestellte Slushhäute mit einer lokalen Verringerung der Schichtdicke des Slushmaterials als Sollbruchstelle für einen Airbag hinter der Armaturentafel, Tür- oder Seitenverkleidungen verwendet werden können.

Bei einem Verfahren gemäß der DE 40 29 254 C2 sind in einer Slushform Trennstege vorgesehen. Mit den Trennstegen läßt sich eine Schwächung der nach einem ersten Slushprozeß gesinterten Haut erzielen, so daß sich dort ein vorgegebener Flächenbereich der zuerst gesinterten Haut vom übrigen Bereich trennen und anschließend herauslösen läßt. In einem zweiten Slushprozeß mit einem andersfarbigen Pulver bildet sich eine weitere, an der herausgelösten Fläche sichtbare Haut und eine nicht sichtbare Haut auf der Rückseite der zuerst gesinterten und in der Form belassenen Haut. So entsteht auf der Sichtseite eine scharfe Trennung von zwei Farbbereichen mehrfarbiger Slushhäute.

Bei einer zweifarbigen Slushhaut haben die Bereiche, in denen die zuerst gesinterte Haut sichtbar ist, etwa die doppelte Dicke der übrigen Bereiche. Dadurch, daß auf die zuerst gesinterte Haut in ihren in der Form verbleibenden Bereichen eine weitere Haut aufgesintert wird, tritt an den Stellen der Stege lediglich eine Krümmung des Verlaufs der weiteren Haut ein, jedoch praktisch kaum eine Schwächung ihrer Dicke.

Bei dem bekannten Verfahren dienten die Trennstege dazu, ein Trennwerkzeug zu führen, das thermisch die Slushhaut durch Erschmelzen trennte und so ermöglichte, die Slushhaut in einem Bereich zu entfernen, der für eine andere Färbung vorgesehen war. Die durch die Formgebung des Trennsteges eintretende lokale Schwächung des Materials war hierbei ein ungewollter Nebeneffekt, der aber wegen der thermischen Trennung der Bereiche gar nicht zu einer mechanischen Schwächung des Materials zur Bildung einer Sollbruchstelle benötigt wurde.

Bei Überlegungen zu Schaffung einer Sollbruchstelle hat sich ergeben, daß der aus der DE 40 29 254 C2 ableitbare Nebeneffekt, mittels der bekannten Trennstege eine Materialschwächung zu bewirken, prinzipiell auch zur Schaffung einer definierten Sollbruchstelle für eine Airbagklappe genutzt werden kann. Dazu ist es erforderlich, daß durch die Ausgestaltung der Stege und/oder durch die Verfahrensweise während des gesamten Slushprozesses eine Zone geringerer Materialstärke der Slushhaut erzeugt wird.

Erfindungsgemäß sind hierzu die Flanken des Steges glatter als die übrigen Bereiche der Form. Auf den Flanken des Steges haftet das Pulver dann noch schlechter, so daß die hier letztlich gebildete Schichtdicke weiter reduziert werden kann.

Bei einer ersten Ausgestaltung ist die Höhe der Stege etwas kleiner, als die durchschnittliche Dicke der Slushhaut gewählt. Wenn im Slushprozeß während der Bepulverung und/oder während des Gelierens die Form gedreht wird, verteilt sich das Slushmaterial so auf der Form, daß sich auf der der Form abgewandten Seite der Slushhaut auch im Bereich der Stege eine weitgehend einheitliche ebene Oberfläche ergibt. Das Slushmaterial ist also bestrebt, die durch die Stege hervorgerufenen Unebenheiten auszugleichen. Hierdurch prägt sich in der Slushhaut eine Nut aus, die die Materialstärke verringert. Bei einem Steg mit sehr steilen Flanken und einem spitzen Grat ergibt sich auch eine komplementär geformte Nut, bei der das Reißverhalten der Sollbruchstelle außer durch die Materialschwächung auch durch die Kerbwirkung der Nut erzielt wird.

Bei einer zweiten Ausgestaltung ist die Höhe der Stege größer, als die durchschnittliche Dicke der Slushhaut gewählt. Wenn im Slushprozeß während des Gelierens die Form gedreht wird, verteilt sich das Slushmaterial so auf der Form, daß auch die Stege mit Slushmaterial überzogen werden und sich die Kontur der Stege auf der Slushhaut abbildet. Dies gilt besonders bei Stegen mit flachen Flanken und einem abgerundeten Grat. Bei dieser Ausgestaltung ergibt sich auf der später sichtbaren Seite eine Schattenfuge.

Die Schichtdicke der Slushhaut über dem Grat kann gezielt durch Prozeßsteuerung verringert werden, wenn während des Bepulverns die Form um eine Achse parallel zum Steg gedreht wird, da dann das Pulver schlechter auf dem Grat haftet. Zusätzlich oder alternativ kann auch die Form während des Gelierens so positioniert werden, daß der Grat des Steges nach oben weist. Außerdem kann die Gelierzeit verlängert werden. Dadurch fließt Material vom Grat herunter, so daß die Slushhaut über dem Grat dünner wird. Die erforderliche Materialstärke für die Sollbruchstelle der Airbagklappe kann so sehr genau eingestellt werden.

Es sind auch Lösungen möglich mit einem ersten hohen Steg, der flach abfallende Flanken aufweist, und einem zweiten kleinen spitzen Steg, der auf dem Grat des ersten Stegs aufsetzt. Dies führt zu einer Kombination der Eigenschaften der beiden Alternativen.

Die Flanken des Steges können auch zur Basis flacher auslaufen, als an der Spitze.

Je nach Dicke des Steges an der Basis kann eine mehr oder minder schmale oder breite Nut geschaffen werden, was zur Erzielung eines optischen Effekts, beispielsweise zur Einstellung der Breite einer Schattenfuge genutzt werden kann. Dabei kann die Belederungsnarbung auch auf dem Steg und damit der späteren Schattenfuge erhalten bleiben.

Nachfolgend wird die Erfindung anhand der Zeichnung näher erläutert. In der Zeichnung zeigen:
- Fig. 1: einen Querschnitt durch einen Teilbereich einer Form mit einem kleinen spitzen Steg,
- Fig. 2 und 3: Querschnitte durch einen Teilbereich einer Form mit jeweils einem hohen, abgerundeten Steg und
- Fig. 4: einen Querschnitt durch einen Teilbereich einer Form mit einem höhen, abgerundeten Steg und einem kleinen spitzen Steg.

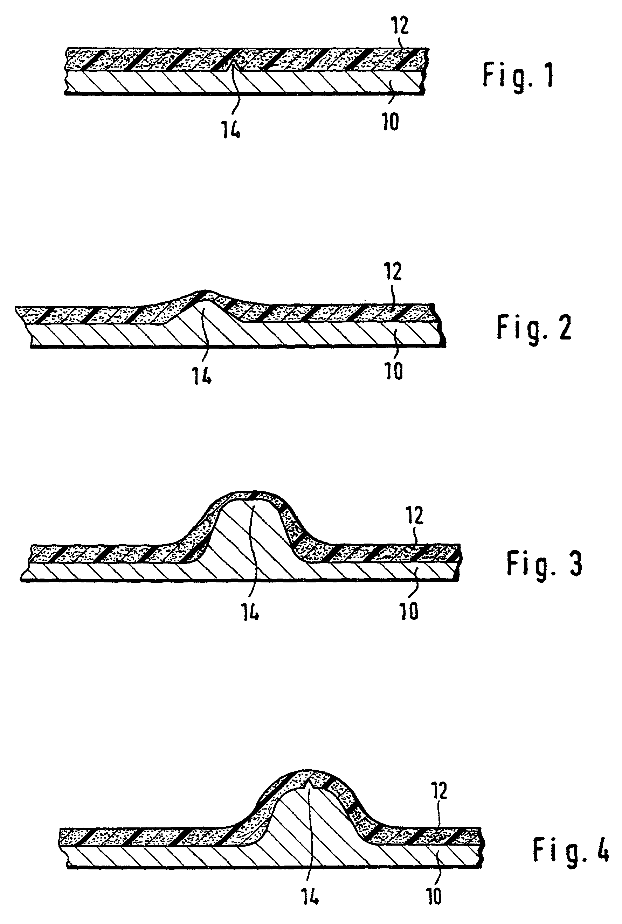

In den Figuren 1 bis 4 sind Querschnitte von Teilbereichen einer Form 10 dargestellt, auf die Slushmaterial 12 aufgebracht ist. Die Form 10 weist einen Steg 14 auf. Die Form 10 ist um eine parallel zum Steg 14 verlaufende Achse drehbar oder auch in einer Drehlage positionierbar.

Bei der Darstellung nach Fig. 1 ist der Steg 14 kleiner als die durchschnittliche Schichtdicke der aus dem Slushmaterial 12 erzeugten Slushhaut. Durch Drehen der Form 10 während der Bepulverung und während des Gelierens zerfließt das Slushmaterial und bildet einen weitgehend ebenen Spiegel. Der Steg 14 zeichnet sich auf der der Form 10 gegenüberliegenden Oberfläche der Slushhaut dann nicht ab. An der Stelle des Steges 14 bildet sich somit eine keilförmige Nut aus, die die Materialdicke verringert und eine Sollbruchstelle in der fertigen Slushhaut darstellt.

In den Figuren 2 und 3 besitzen die Stege 14 eine unterschiedliche Höhe und Gestalt, beide sind aber jeweils höher als die durchschnittliche Schichtdicke der aus dem Slushmaterial 12 erzeugten Slushhaut. Außerdem ist der Steg an seinem Grat abgerundet. Hier zeichnet sich der Steg 14 auch auf der der Form 10 gegenüberliegenden Oberfläche der Slushhaut ab. Um eine Materialschwächung im Bereich des Steges 14 zu erhalten, kann die Form 10 während des Bepulverung gedreht werden. Dann haftet das Slushmaterial schlechter auf dem Grat des Steges 14. Zusätzlich kann die Form auch während des Gelierens so positioniert werden, daß der Grat des Steges 14 noch oben zeigt. Dann fließt während des Gelierens Slushmaterial vom Steg 14 herunter und ergibt eine geringere Schichtdicke im Bereich des Steges 14.

Bei der Form 10 nach Fig. 4 ist schließlich ein Steg 14 vorhanden, der aus einem hohen, abgerundeten Steg und einem zusätzlich auf dessen Grat aufgesetzten kleinen, spitzen Steg zusammengesetzt ist. Bei Drehen der Form 10 während des Bepulverns und Gelierens folgt die sich bildende Slushhaut der Kontur des hohen Steges, im Bereich des kleinen spitzen Steges ergibt sich jedoch eine spitze Nut. Mit einer Form in dieser Ausgestaltung kann somit eine Schattenfuge erzielt werden, bei der eine lokal genau definierte Sollbruchstelle eingearbeitet ist.

## Patentansprüche

1. Verfahren zur Herstellung von Armaturentafeln, Tür- oder Seitenverkleidungen für Fahrzeuge mit einer Sollbruchstelle für einen Airbag, wobei Slushmaterial in eine die Formgebung die Slushhaut bestimmende, auf eine Formtemperatur aufheizbare Form (10) eingebracht wird, wobei sich das Slushmaterial (12) durch Rotation der Form (10) an der beheizten Formfläche verteilt und ablagert und anschließend sintert und geliert und nach Abkühlung der Form (10) die Slushhaut durch Entformen aus der Form (10) entnommen wird, wobei zur Schaffung der Sollbruchstelle eine Form (10) verwendet wird, die auf ihrer Formfläche an der zu schaffenden Sollbruchstelle einen Steg (14) trägt, wobei durch gezieltes Drehen und/oder Positionieren der Form (10) während des Bepulverns und/oder während des Gelierens des Slushmaterials (12) eine Verringerung der Schichtdicke des Slushmaterials (12) auf ein eine vorgegebene Reisfestigkeit der Sollbruchstelle bestimmendes Maß verringert wird, **dadurch gekennzeichnet, daß** die Flanken des Steges (14) glatter als die übrigen Bereiche der Form (10) sind.

2. Verfahren nach Anspruch 1, **dadurch gekennzeichnet, daß** der Steg (14) eine Höhe aufweist, die geringer als die durchschnittliche Schichtdicke des Slushmaterials (12) ist, und eine Form aufweist, bei der die Flanken einen Winkel kleiner 120 Grad einschließen und einen spitzen Grat bilden.

3. Verfahren nach Anspruch 1, **dadurch gekennzeichnet, daß** der Steg (14) eine Höhe aufweist, die größer als die durchschnittliche Schichtdicke des Slushmaterials (12) ist, und eine Form aufweist, bei der die Flanken einen Winkel größer 70 Grad einschließen und einen abgerundeten oder abgeflachten Grat bilden und daß die Form (10) während des Bepulverns um eine parallel oder annähernd parallel zum Steg (14) verlaufende Achse gedreht wird und während des Gelierens in einer Drehlage positioniert wird, in der der Grat nach oben weist.

4. Verfahren nach einem der Ansprüche 1 bis 3, **dadurch gekennzeichnet, daß** Flanken des Steges (14) zur Basis flacher auslaufen als an der Spitze.

## Claims

1. Method for the manufacture of instrument panels, door or side panels for vehicles having a predetermined breaking point for an airbag, slush material being introduced into a mould (10) heatable to a moulding temperature and used for shaping the slush skin, the slush material (12) being spread and deposited on the heated mould surface by rotating the mould (10) and is subsequently sintered and gelled and following the cooling of the mould (10) the slush skin is removed from the mould (10), in which for producing the predetermined breaking point use is made of a mould (10), which carries on its mould surface a web (14) at the breaking point to be created and by plan rotation and/or positioning of the mould (10) during powdering and/or during gelling of the slush material (12) there is a reduction to the layer thickness of the slush material (12) to an amount establishing a predetermined breaking strength of the breaking point, **characterized in that** the flanks of the web (14) are smoother than the remaining areas of the mould (10).

2. Method according to claim 1, **characterized in that** the web (14) has a height smaller than the average layer thickness of the slush material (12) and a shape such that the flanks include an angle smaller than 120° and form a pointed burr.

3. Method according to claim 1, **characterized in that** the web (14) has a height greater than the average layer thickness of the slush material (12) and has a shape where the flanks include an angle greater than 70° and form a rounded or flattened burr and that during powdering the mould (10) is rotated about an axis parallel or approximately parallel to the web (14) and during gelling is positioned in a rotation position where the burr is directed upwards.

4. Method according to one of the claims 1 to 3, **characterized in that** the flanks of the web (14) taper at a smaller angle to the base than at the tip.

## Revendications

1. Procédé de fabrication de tableaux de bord, d'habillages latéraux ou d'habillages de porte pour des véhicules avec une section de rupture intentionnellement prévue pour un airbag selon lequel un moule (10) déterminant la forme de la peau slush, pouvant être réchauffé à une température de moulage est rempli de matière slush (12) qui se répartit et se dépose sur la surface chauffée du moule (10) par rotation de celui-ci, puis la matière slush se fritte et se gélifie, une fois le moule (10) refroidi, la peau slush est enlevée du moule (10) par démoulage pour la réalisation de la section de rupture intentionnellement prévue, utilisant un moule (10) portant une nervure (14) sur la surface de moulage sur la section de rupture à créer et en diminuant l'épaisseur de couche de la matière slush (12) à une valeur déterminant une résistance à la déchirure spécifiée de la section de rupture intentionnellement prévue en tournant et/ou en positionnant le moule (10) de manière appropriée pendant l'application de la poudre et/ou pendant la gélification de la matière slush (12), **caractérisé en ce que** les flancs de la nervure (14) sont plus lisses que les autres parties du moule (10).

2. Procédé suivant la revendication 1, **caractérisé en ce que** la nervure (14) présente une hauteur inférieure à l'épaisseur de couche moyenne de la matière slush (12) et qu'elle présente une forme, suivant laquelle les flancs définissent entre eux un angle inférieur à 120° et forment une arête pointue.

3. Procédé suivant la revendication 1, **caractérisé en ce que** la nervure (14) présente une hauteur supérieure à l'épaisseur de couche moyenne de la matière slush (12) et qu'elle présente une forme suivant laquelle les flancs définissent entre eux un angle supérieur à 70° et forment une arête arrondie ou aplatie, et **en ce que** le moule est tourné autour d'un axe parallèle ou approximativement parallèle à la nervure (14) pendant l'application de la poudre et qu'il est positionné, pendant la gélification, dans une position de rotation, dans laquelle l'arête est dirigée vers le haut.

4. Procédé suivant une des revendications 1 à 3, **caractérisé en ce que** les flancs de la nervure (14) s'aplatissent davantage en direction de la base qu'à la pointe.
